# EUROPÄISCHE PATENTSCHRIFT

(11) **EP 2 937 279 B1**
(45) Veröffentlichungstag und Bekanntmachung des Hinweises auf die Patenterteilung: **28.12.2016**
(21) Anmeldenummer: 15164215.4
(22) Anmeldetag: 20.04.2015
(51) Int. Cl.: B64C 1/20, B64D 9/00

(54) **FRACHTLADESYSTEM FÜR DAS BE- UND ENTLADEN EINES FRACHTSTÜCKS, VERFAHREN ZUR ERSTELLUNG UND/ODER AKTUALISIERUNG EINES LADEPLANS**
FREIGHT LOADING SYSTEM FOR LOADING AND UNLOADING OF AN ITEM OF FREIGHT, METHOD FOR CREATING AND/OR UPDATING A LOADING PLAN
SYSTÈME DE CHARGE DE FRET POUR LE CHARGEMENT/DÉCHARGEMENT DE FRET, PROCÉDÉ DE CRÉATION ET/OU DE MISE À JOUR D'UN PLAN DE CHARGEMENT

(30) Priorität: 22.04.2014 DE 102014105657
(43) Veröffentlichungstag der Anmeldung: 28.10.2015
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- EP-A2- 2 444 320
- EP-A2- 2 532 582
- DE-A1-102011 000 819
- DE-A1-102011 000 820
- US-A1- 2010 100 225

## Beschreibung

Die Erfindung betrifft ein Frachtladesystem für das Be- und Entladen eines Frachtdecks sowie ein Verfahren zur Erstellung und/oder zur Aktualisierung eines Ladeplans.

Zum Transport von Luftfracht werden die zu transportierenden Frachtstücke, insbesondere Container oder Paletten, die vorzugsweise nach bestimmten Normen gefertigt sind, innerhalb des Frachtraums mittels Riegelelementen am Frachtdeck des Frachtraums befestigt. Derartige Riegelelemente bilden häufig Frachtladebahnen aus, zwischen denen die genormten Frachtstücke positioniert werden können. Um die Frachtstücke an den für sie vorgesehenen Positionen zu positionieren, werden Frachtladesysteme verwendet, die das Bodenpersonal beim Be- und Entladen unterstützen. Die Frachtladesysteme sollen den Vorgang beschleunigen und vorzugsweise sehr einfach zu bedienen sein, da das Bodenpersonal häufig keine Einweisung bezüglich eines speziellen Frachtladesystems genossen hat. Hinzu kommt, dass sowohl das Be- als auch das Entladen unter hohem Zeitdruck durchgeführt wird, wodurch es leicht zu Fehlbedienungen kommt.

Es ist ein zunehmender Trend, dass Betreibergesellschaften zum jedem Zeitpunkt gerne wissen möchten, an welcher Stelle sich ein bestimmtes Frachtstück befindet. Zum einen werden diese Informationen von Kunden angefordert, zum anderen ermöglichen derartige Informationen eine bessere Auswertung der Vorgänge.

Des Weiteren kommt es häufig vor, dass Frachtstücke an einem falschen Flughafen entladen oder in ein falsches Flugzeug eingeladen werden.
Selbst wenn ein Frachtstück in das richtige Flugzeug eingeladen wird, kann eine schlechte Ladestrategie die Abläufe erheblich stören. Fliegt ein Flugzeug beispielsweise mehrere Flughäfen an, so ist es wünschenswert, dass die Frachtstücke, die am ersten anzufliegenden Flughafen entladen werden sollen, sich an entsprechenden Positionen nahe den Ladeluken befinden. Ein vollständiges Entladen des Frachtdecks nur aufgrund eines einzigen falsch positionierten Frachtstücks kostet Zeit und Geld. Daher gibt es Ladepläne, die die gewünschte Position eines Frachtstücks auf dem Frachtdeck angeben. Häufig werden diese Ladepläne jedoch nicht eingehalten, da verschiedene Parameter (Gewicht, Anzahl von Koffern pro Frachtstück, usw.) nicht ausreichend genau vorhergesagt werden können. Auch kommt es vor, dass von den vorab erstellten Frachtladeplänen abgewichen wird, weil dies die aktuelle Situation (beispielsweise ein Überstand, ein defekter Abschnitt des Frachtdecks usw.) erfordert. Unter diesen Umständen ist es wünschenswert, eine schnelle Aktualisierung eines Ladeplans vornehmen zu können. Vorzugsweise soll ein entsprechender Vorgang automatisiert erfolgen.

Aus der US 2010/100225 ist ein Frachtladesystem bekannt, das anhand eines Identifikationssystems mit RFID-Technik in Echtzeit die Parkposition der Frachtstücke auf dem Frachtdeck erfasst und daraus einen Ladeplan erstellt. Dieses System erfordert eine lückenlose RFID-Sensorenabdeckung.

Aus der EP 2 444 320 A2 ist ein Frachtladesystem bekannt, in dem der Be-/Entladebereich des Frachtdecks mit einer Vielzahl von Sensoren ausgestattet ist, deren Überdeckung sowie deren Verlauf ein Überdeckungsmuster ergibt, aus dem, bzw. aus den Änderungen desselben, sich die Position und Bewegung eines Frachtstücks ableiten lässt. Mithilfe von am Eingangsbereich erfassten oder ermittelten Abmessungsdaten des Frachtstücks kann somit eine Bewegungsgeschwindigkeit und -bahn des Frachtstücks in die gewählte längs ausgerichtete Förderroute überwacht werden, wobei Kollisionen mit anderen Frachtstücken bzw. mit Wänden des Frachtdecks vermieden und die Ausrichtung der Fördereinrichtungen zwecks Vermeidung von übermäßigen Verschleiß laufend optimiert wird.

Ausgehend von diesem Stand der Technik ist es Aufgabe der vorliegenden Erfindung, ein Frachtladesystem anzugeben, das ein effizientes Be- und Entladen eines Frachtdecks gewährleistet. Insbesondere soll mit möglichst einfachen Komponenten die aktuelle Endposition eines Frachtstücks auf dem Flugzeugdeck des Frachtladesystems bestimmt werden können.

Die genannte Aufgabe wird durch ein Frachtladesystem gemäß dem Anspruch 1 gelöst.

Insbesondere wird die Aufgabe durch ein Frachtladesystem für das Be- und Entladen eines Frachtdecks gelöst, wobei das Frachtladesystem umfasst:
- mindestens eine im Eingangsbereich des Flugzeugs angebrachte Frachtleseeinrichtung zum Erfassen mindestens einer Kennung eines Frachtstücks;
- eine Vielzahl von Frachtfördereinrichtungen mit jeweils mindestens einer Rolle zum Fördern des Frachtstücks entlang einer Förderroute in eine Endposition,
- eine Vielzahl von Sensoren,
- eine Steuerung die Signale von den Sensoren empfängt, um eine

Bewegung des Frachtstücks entlang der Förderroute anhand eines sich verändernden Überdeckungsmusters zu erfassen,
und kommunikativ mit der Frachtleseeinrichtung verbunden ist,
wobei das Überdeckungsmuster angibt welche Frachtfördereinrichtungen von dem Frachtstück überdeckt werden,
wobei die Steuerung dazu ausgebildet ist, anhand der Signale die Endposition des Frachtstücks auf dem Frachtdeck zu erfassen und Daten, die die Endposition angeben, in Verbindung mit der im Eingangsbereich erfassten Kennung des Frachtstücks zu speichern, wobei eine Position dann als Endposition erfasst und in Verbindung mit der erfassten Kennung gespeichert wird, wenn sich das Überdeckungsmuster nicht mehr ändert.

Eine Grundidee der erfindungsgemäßen Lehre besteht also darin, ein bestimmtes Frachtstück an einer zentralen Stelle, beispielsweise nahe der Ladeluke oder des Eingangsbereichs, zu identifizieren und danach die Förderroute des Frachtstücks auf dem Flugzeugdeck zu verfolgen. Die Förderroute ermöglicht es dem identifizierten Frachtstück, eine Endposition zuzuordnen. Erfindungsgemäß soll diese Endposition in Zusammenhang mit der erfassten Kennung gespeichert werden.

Eine Förderroute kann eine durchgehende Linie von einem Anfangspunkt bis hin zu einem Endpunkt, der Endposition sein. Aufgrund der mechanischen Gegebenheiten (beispielsweise ein Frachtdeck hat nur zwei Förderbahnen) kann der Detaillierungsgrad einer Förderroute auch relativ grob gewählt werden. So kann die Förderroute den Weg des Frachtstücks abschnittsweise, beispielswies nur an bestimmten Verzweigungsstellen, angeben.

Des Weiteren ist es nicht notwendig, die gesamte Förderroute zu speichern, soweit man zu jedem Zeitpunkt angeben kann, wo sich ein bestimmtes Frachtstück befindet. Insofern können verschiedene Zwischenstopps berücksichtigt werden, wobei zu jedem Zeitpunkt eine Zuordnung zwischen Kennung und Position möglich ist. Insofern kann eine Förderroute auch nur den Weg von einem Zwischenstopp zu dem nächsten angeben.

Das erfindungsgemäße Konzept ermöglicht es, ohne das Vorsehen einer Vielzahl von Frachtleseeinrichtungen, die über das gesamte Flugzeugdeck verstreut angeordnet sind, die Position eines bestimmten Frachtstücks relativ genau zu bestimmen. Das entsprechende Frachtdeck kann also relativ einfach ausgestaltet werden. Auf teure Leseeinrichtungen, die sich mit zunehmender Anzahl gegenseitig stören kann verzichtet werden.

Die Steuerung kann kommunikativ, insbesondere über einen Kommunikationsbus, mit der Vielzahl von Frachtfördereinrichtungen verbunden sein, um eine Aktivierung mindestens einiger der Frachtfördereinrichtungen zu erfassen und/oder zu veranlassen. Ebenso kann der Kommunikationsbus einzelne Sensoren mit der Steuerung verbinden.

Die Steuerung kann zentral oder dezentral implementiert werden.

In einem Ausführungsbeispiel erfasst das erfindungsgemäße Frachtladesystem ausschließlich die Aktivierungszustände der Frachtfördereinrichtungen. Über eine Verfolgung dieser Aktivierungszustände über die Zeit ist es möglich, die Förderroute, die ein bestimmtes Frachtstück nimmt, zu ermitteln. Zusätzlich oder alternativ kann die Steuerung die Aktivierung der Frachtfördereinrichtungen vorgeben, so dass die Förderroute aktiv bestimmt und nicht nur passiv erfasst wird.

Die Genauigkeit der Ermittlung der Förderroute wird verbessert, wenn man die Abmessungen des Frachtstücks kennt. Die Steuerung kann dazu ausgebildet sein, eine Abmessung einer Bodenfläche des Frachtstücks zu erfassen und für eine Bestimmung der Endposition und/oder Förderroute des Frachtstücks zu verarbeiten. In einem Ausführungsbeispiel werden die Abmessungen im Eingangsbereich des Flugzeugs durch eine entsprechende Sensorik, beispielsweise eine Lichtschranke, vermessen. In einem alternativen Ausführungsbeispiel ermöglicht es die erfasste Kennung, die Abmessung der Bodenfläche zu ermitteln. Das Frachtladesystem kann über entsprechende Tabellen verfügen. Alternativ kann ein Teil der Kennung die Bodenfläche und/oder den Typ des Frachtstücks spezifizieren. Erfindungsgemäß wäre es auch möglich, die Abmessungen der Bodenfläche manuell einzugeben.

Die Sensoren können Lichtsensoren umfassen, die derart am Frachtdeck angeordnet und ausgebildet sind, dass sie zumindest das Vorhandensein eines Frachtstücks erfassen. Lichtsensoren am Frachtdeck ermöglichen es relativ einfach, die Überdeckung des entsprechenden Lichtsensors durch ein Frachtstück zu erfassen. Insofern lässt sich mit derartigen Sensoren relativ einfach die Position des Frachtstücks zu einem bestimmten Zeitpunkt ermitteln.

In einem Ausführungsbeispiel wird die Förderroute eines Frachtstücks unter Berücksichtigung von Sensorsignalen, sowie von Signalen, die den Aktivierungszustand der Frachtfördereinrichtungen angeben, ermittelt. Auf diese Weise lässt sich eine sehr präzise Förderroute berechnen.

Zumindest eine Teilmenge der Sensoren kann in einem das Frachtdeck in seiner Breite überspannendem Raster, vorzugsweise im Be- und Entladebereich des Frachtdecks, angeordnet sein. Da Frachtstücke üblicherweise im Be- und Entladebereich gedreht und korrespondierend zu den vorgesehenen Frachtladebahnen ausgerichtet werden, ist eine relativ hohe Sensordichte im Bereich des Be- und Entladebereichs vorteilhaft. Des Weiteren sollten die einzelnen Frachtladebahnen zumindest abschnittsweise mit entsprechenden Sensoren ausgestattet werden. In einem bevorzugten Ausführungsbeispiel sind in Längsrichtung einer Frachtladebahn mindestens alle zwei Meter Sensoren zur Detektion des Vorhandenseins des Frachtstücks angeordnet. Diese Sensoren sind kommunikativ mit der Steuerung verbunden, um die Förderroute jedes Frachtstücks zu erfassen.

Zumindest eine Teilmenge der Frachtfördereinrichtungen kann jeweils mindestens einen Sensor, vorzugsweise mindestens zwei oder vier Sensoren, zur Erfassung des Frachtstücks umfassen. In einem Ausführungsbeispiel sind diese Sensoren an der jeweiligen Frachtfördereinrichtung angeordnet. Vorzugsweise umgeben die Sensoren eine Rolle. Entsprechende Anordnungen sind bekannt und dienen u.a. dazu, die Rolle einer bestimmten Frachtfördereinrichtung zum richtigen Zeitpunkt anzuheben, ohne dass diese beschädigt wird. Bei modernen Frachtladesystemen kann auch vorab eine Ausrichtung der Rolle anhand der empfangenen Sensorsignale erfolgen.

Zumindest eine Teilmenge der Frachtfördereinrichtungen sollte erfindungsgemäß in einem Raster angeordnet sein. Dies ist besonders vorteilhaft im Be- und Entladebereich des Frachtdecks, da hier häufig Frachtstücke vorbeifahren und ggf. ihre Förderrichtung ändern.

Die Steuerung kann dazu ausgebildet sein, zumindest einige der Signale als Signalsatz, insbesondere in Verbindung mit einer Reihenfolge und/oder einer Zeitangabe zu speichern. Grundsätzlich reicht es aus, die Kennung eines Frachtstücks in Verbindung mit der Endposition zu speichern. In einem bevorzugten Ausführungsbeispiel werden auch Angaben gespeichert, die es ermöglichen, die Förderroute ab dem Zeitpunkt, an dem die Kennung des Frachtstücks erfasst wurde, bis hin zur Endposition zu rekonstruieren. Entsprechende Daten können in Form eines Signalsatzes gespeichert werden. In einem Ausführungsbeispiel wird die Vielzahl von erfassten Signalen in einer Reihenfolge gespeichert, so dass es eine Ordnung gibt, die es ermöglicht, die zeitliche Reihenfolge des Empfangs der Signale zu rekonstruieren. Alternativ oder zusätzlich können konkrete Zeitangaben in Verbindung mit den Signalen oder Signalsätzen gespeichert werden. Vorzugsweise werden diese Informationen langfristig gespeichert, so dass diese auch zu einem späteren Zeitpunkt noch zur Verfügung stehen.

Die Steuerung kann dazu ausgebildet sein, unter Berücksichtigung einer eingegebenen Ladeposition eine Steuerstrategie zu entwickeln und eine Vielzahl der Frachtfördereinrichtungen gemäß der Steuerstrategie zu steuern. Wie bereits erläutert, muss die Steuerung nicht lediglich dazu ausgebildet sein, eine von einer Person vorgegebene Steuerstrategie so zu erfassen, dass letztendlich die Bestimmung der Endposition möglich ist. Erfindungsgemäße Frachtladesysteme können den Ladevorgang zumindest automatisieren, so dass das Ladepersonal lediglich eine Endposition vorgeben muss, wobei die Steuerung eine Steuerstrategie ermittelt, so dass die Frachtstücke diese Endposition anfahren. Erfindungsgemäß überwacht die Steuerung den Ladevorgang dann derart genau, dass die Förderroute des Frachtstücks erfasst wird und mit Sicherheit festgestellt werden kann, dass eine bestimmte Endposition angefahren wurde. Insbesondere manuelle Nachkorrekturen und/oder spätere Umladevorgänge werden erfasst, wobei das System zu jedem Zeitpunkt die genaue Position eines bestimmten Frachtstücks kennt.

Die Steuerung kann also dazu ausgebildet sein, die Förderroute eines Umladevorgang eines Frachtstücks zu überwachen, unter Berücksichtigung der Förderroute eine neue Endposition des Frachtstücks zu bestimmen, und die neue Endposition in Verbindung mit einer erfassten Kennung des Frachtdecks zu speichern. Die erfindungsgemäße Steuerung sorgt also dafür, dass die einem bestimmten Frachtstück bzw. einer bestimmten Kennung zugeordnete Endposition stets auf dem aktuellsten Stand ist.

Die eingangs genannte Aufgabe wird des Weiteren durch ein Flugzeug umfassend das bereits beschriebene Frachtladesystem gelöst. Es ergeben sich ähnliche Vorteile, wie diese bereits in Verbindung mit dem Frachtladesystem erläutert wurden.

Des Weiteren wird die erfindungsgemäße Aufgabe durch ein Verfahren zur Erstellung und/oder Aktualisierung eines Ladeplans gelöst, das die folgenden Schritte umfasst:
- Erfassen einer Kennung eines Frachtstücks in mindestens einem Einfahrtsbereich oder Eingangsbereich eines Frachtdecks;
- Empfangen einer Vielzahl von Signalen von Sensoren, die zumindest über einen Abschnitt des Frachtdecks verteilt angeordnet sind,
- Ermitteln einer Förderroute anhand der Signale;
- Berechnen einer Endposition des Frachtstücks unter Berücksichtigung der Förderroute;
- Speichern von Daten, die die Endposition angeben, in Verbindung mit der erfassten Kennung.

In einem Ausführungsbeispiel wird das Verfahren von dem bereits beschriebenen Frachtladesystem in einer der beschriebenen Ausgestaltungen umgesetzt.

Verfahrensseitig wird also ein Ladeplan erstellt und/oder aktualisiert, wobei wiederum in einem zentralen Bereich, beispielsweise dem Einfahrtsbereich des Frachtdecks, eine Kennung erfasst und dann anhand der Verfolgung einer Förderroute eine Endposition bestimmt wird. Das Datenpaar (Kennung und Endposition) kann dann genutzt werden, um den Ladeplan, der vielleicht schon vorhanden ist, zu aktualisieren und/oder diesen zu ergänzen. Eine manuelle Interaktion ist nicht notwendig. Letztendlich kann auch ein vorgegebener Ladeplan mit einem dynamisch anhand des beschriebenen Verfahrens erstellten Ladeplans verglichen werden. Abweichungen können erfasst und einem Benutzer angezeigt werden. Fehler beim Be- und/oder Entladen des Frachtdecks können auf diese Weise frühzeitig erkannt und korrigiert werden.

Das Erfassen der Kennung kann ein Auslesen eines am Frachtstück angebrachten Speichers, insbesondere eines RFID-Chips, umfassen. Die Kennzeichnung von Frachtstücken mittels RFID-Chips ist relativ einfach und kostengünstig.

Des Weiteren kann bei dieser Technologie auf die Bereitstellung von Energiequellen an den Frachtstücken verzichtet werden, so dass auf der Seite des Frachtstücks keine Wartung erfolgen muss.

Mindestens einige der Signale von den Sensoren können in einer zeitlichen Reihenfolge und/oder in Verbindung mit Zeitangaben gespeichert werden.

Mindestens einige der Signale können eine Aktivierung eines Aktuators, insbesondere einer Frachtfördereinrichtung, zu einem bestimmten Zeitpunkt angeben.

Die genannte Aufgabe wird des Weiteren durch ein Computer lesbares Medium mit Instruktionen zur Durchführung des bereits beschriebenen Verfahrens, insbesondere in einer bestimmten Ausführungsform, gelöst, wenn die Instruktionen auf einer Recheneinheit ausgeführt werden.

Weitere vorteilhafte Ausgestaltungen ergeben sich anhand der Unteransprüche.

Nachfolgend wird die Erfindung mittels mehrerer Ausführungsbeispiele beschrieben, die anhand von Abbildungen näher erläutert werden.

### Hierbei zeigen:

- Fig. 1: eine Draufsicht auf ein Frachtdeck eines Flugzeugs, wobei die Förderroute eines Frachtstücks schematisch dargestellt wird;
- Fig. 2: eine Detailansicht des Frachtdecks aus Fig. 1;
- Fig. 3: eine schematische Darstellung der erfindungsgemäßen Steuerung mit Aktuatoren und Sensoren;
- Fig. 4: eine Detailansicht der Frachtfördereinrichtungen des Frachtdecks gemäß Fig. 1;
- Fig. 5: eine schematische Darstellung des Frachtstücks aus Fig. 1;
- Fig. 6: eine alternative Ausführungsform eines Frachtstücks;
- Fig. 7: eine Ecke des Frachtstücks gemäß Fig. 6 mit Transponder-Halteeinrichtung für einen RFID-Tag.

In der nachfolgenden Beschreibung werden für gleiche und gleich wirkende Teile dieselben Bezugsziffern verwendet.

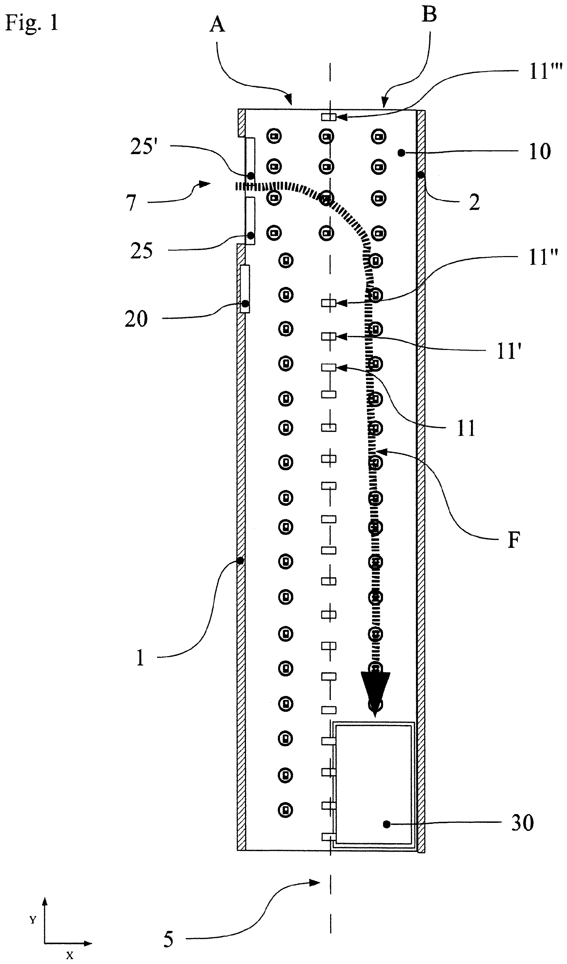

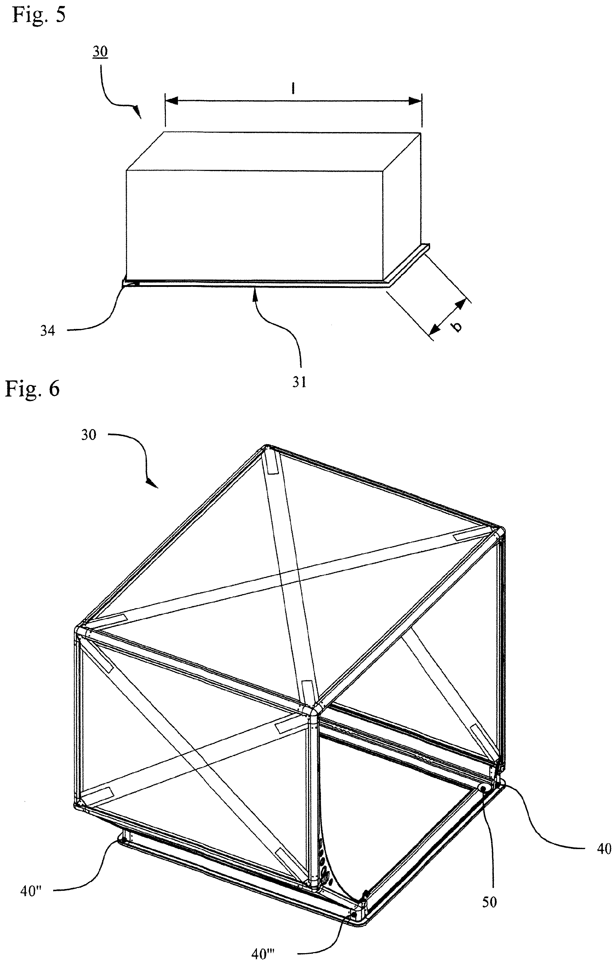

Die Fig. 1 zeigt eine Draufsicht auf ein Frachtdeck 10 mit einem erfindungsgemäßen Frachtladesystem. Das Frachtdeck 10 ist im Wesentlichen rechteckig und erstreckt sich in der X-Y-Ebene (die Y-Richtung entspricht der Längsrichtung des Flugzeugs und die X-Richtung der Querrichtung) des Flugzeugs und ist durch eine linke Seitenwand 1 und eine rechte Seitenwand 2 begrenzt. Die linke Seitenwand ist abschnittsweise zur Bildung einer Türöffnung 7 unterbrochen. Durch die Türöffnung 7 kann ein Frachtcontainer 30, wie dieser schematisch in der Fig. 5 gezeigt ist, in den Frachtraum eingebracht werden. Eine wesentliche Komponente des Frachtladesystems ist eine Steuerung 20, die kommunikativ mit den einzelnen Sensoren und Aktuatoren des Frachtdecks 10 in Verbindung steht.

Die Steuerung 20 ist dazu ausgebildet, im Eingangsbereich nahe der Türöffnung 7 mittels in den Boden eingelassener RFID-Sensoreinrichtungen 25, 25' eine Kennung des Frachtcontainers 30 zu erfassen. Danach verfolgt die Steuerung 20 den Weg, den der Frachtcontainer 30 bis hin zu dessen Endposition (vgl. Position des Frachtcontainers 30 in Fig. 1) nimmt. Dieser Weg (vgl. gestrichelter Pfeil der Fig. 1) gibt Aufschluss über eine Förderroute F entlang derer der Frachtcontainer 30 geführt wird. Erfindungsgemäß nutzt die Steuerung 20 die Förderroute F, um die Endposition des Frachtcontainers 30 zu bestimmen und diese in Verbindung mit der erfassten Kennung des Frachtcontainers zu speichern. Diese Kennung ist vorzugsweise in einem RFID-Tag 34 gespeichert, das am Frachtcontainer 30 befestigt ist (vgl. Fig. 5).

Das Frachtdeck 10 der Fig. 1 ist im Wesentlichen symmetrisch zu einer Mittelebene 5 ausgebildet. Entlang dieser Mittelebene 5 sind eine Vielzahl von Mittelriegeln 11, 11', 11", 11"' angeordnet. Diese Mittelriegel 11, 11', 11", 11"' definieren eine erste Frachtladebahn A (links) und eine zweite Frachtladebahn B (rechts). Innerhalb dieser Frachtladebahnen können Frachtstücke, insbesondere der Frachtcontainer 30, fixiert werden und ihre Endposition einnehmen. Die Frachtladebahnen A, B sind mit einer Vielzahl von Frachtfördereinrichtungen, beispielsweise den Frachtfördereinrichtungen 200, 210 ausgestattet. Auch die Anordnung der Frachtfördereinrichtungen 200, 210 in den Frachtladebahnen A, B ist im Wesentlichen symmetrisch zu der Mittelebene 5. Im Be- und Entladebereich des Frachtdecks 10 nahe der Türöffnung 7 ist die Dichte der Frachtfördereinrichtungen 100, 110, 120, 130, 140, 150, 160, 170, 180, 190 besonders hoch, so dass der Frachtcontainer 30 in diesem Bereich gedreht werden kann. Des Weiteren erfolgt in diesem Bereich eine Ausrichtung des Frachtcontainers 30 derart, dass dieser in eine der Frachtförderbahnen A oder B eingefahren werden kann. Die erfindungsgemäße Steuerung 20 verfolgt diesen Ausrichtungsvorgang genau, so dass die Förderroute F bestimmt werden kann.

Die Frachtfördereinrichtung 100, 110, 120, ..., 210 sind dazu ausgebildet, den einfahrenden Frachtcontainer 30 zu transportieren und in eine vorgegebene Position innerhalb der Frachtladebahn A, B zu verschieben. Bei den verwendeten Frachtfördereinrichtungen 100, 110, 120, ..., 210 kann es sich beispielsweise um solche handeln, wie diese in der DE 198 07 229 A1 erläutert sind. Theoretisch können auf dem gesamten Frachtdeck 10 die gleichen Frachtfördereinrichtungen 100, 110, 120, ..., 210 verwendet werden. Vorzugsweise haben jedoch die Frachtfördereinrichtungen 200, 210 aus den Frachtförderbahnen A, B einen geringeren Funktionsumfang (z.B. keine Drehfunktion).

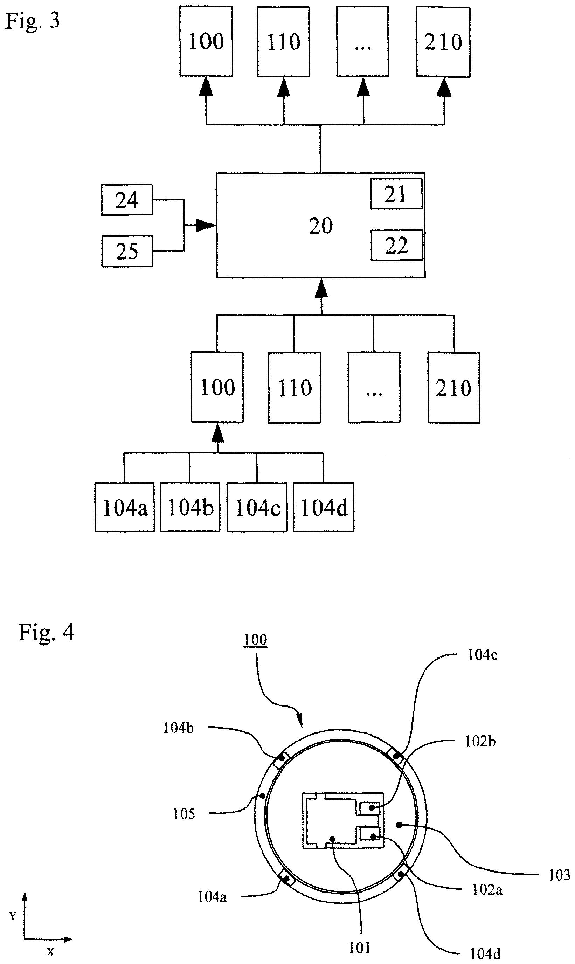

Die Fig. 4 zeigt exemplarisch eine Detailansicht der Frachtfördereinrichtung 100. Die Frachtfördereinrichtung 100 hat einen ringförmigen Rahmen 105 und einen kreisförmigen, im Rahmen 105 angeordneten Rotationsteller 103 (auf einen derartigen Rotationsteller kann bei den Frachtfördereinrichtungen 200, 210 der Förderbahnen A, B verzichtet werden). Der Rotationsteller 103 ist derart drehbeweglich innerhalb des Rahmens 105 gelagert, dass sich dieser in der X-Y-Ebene um eine Rotationsachse drehen lässt. Die Frachtfördereinrichtung 100 weist entsprechende Aktuatoren und Sensoren auf, so dass der Rotationsteller 103 innerhalb des Rahmens 105 beliebig ausgerichtet werden kann. Die Sensoren geben Aufschluss über die Ausrichtung des Rotationstellers 103 innerhalb des Rahmens 105. Erfindungsgemäß fragt die Steuerung 20 diese Sensoren ab, um die Förderroute F zu bestimmen.

Der Rotationsteller 103 beherbergt eine Rollenantriebseinheit 101, die Antriebsrollen 102a, 102b antreibt. Die Antriebsrollen 102a, 102b sind dazu ausgebildet, den Frachtcontainer 30 in eine Richtung quer zur Drehachse der Antriebsrollen 102a, 102b im Wesentlichen innerhalb der X-Y-Ebene anzutreiben. Die Frachtfördereinrichtung 100 umfasst des Weiteren vier Sensoreinrichtungen 104a, 104b, 104c, 104d, die an dem Rahmen 105 angeordnet sind. Die Ausrichtung des Rotationstellers 103 beeinflusst daher die Position der Sensoreinrichtungen 104a, 104b, 104c, 104d nicht. Vorzugsweise sind die Sensoreinrichtungen 104a, 104b, 104c, 104d jeweils auf der gegenüberliegenden Seite des Rahmens 105 angeordnet und können jeweils getrennt voneinander die Überdeckung durch ein Frachtstück erfassen. Erfindungsgemäß können die Sensoreinrichtung 104a, 104b, 104c, 104d einen Photodetektor und eine Leuchtdiode umfassen, um die beschriebene Funktion (Überdeckungserfassung) zu gewährleisten.

Die erfindungsgemäße Steuerung 20 fragt auch die Sensoreinrichtungen 104a, 104b, 104c, 104d der Frachtfördereinrichtungen 100, 110, ..., 190 ab, um die Förderroute F zu bestimmen. Auch die Fördereinrichtungen 200, 210 der Förderbahnen A, B sind mit entsprechenden Sensoreinrichtungen 104a, 104b, 104c, 104d ausgestattet, die kommunikativ mit der Steuerung 20 verbunden sind. Insofern ist eine Erfassung des Frachtcontainers 30 auch innerhalb der Frachtförderbahnen A, B möglich.

Aufgrund der bereits unter Bezugnahme auf Fig. 1 beschriebenen Anordnung der einzelnen Frachtfördereinrichtungen 100, 110, 120, ..., 190 und der Ausstattung jeder der Frachtfördereinrichtungen 100, 110, 120, ..., 190 mit entsprechenden Sensoreinrichtungen 104a, 104b, 104c, 104d, ergibt sich ein Netz von Sensoreinrichtungen, das den Be- und Entladebereich des Frachtdecks 10 relativ engmaschig abdeckt. Diese Vielzahl von Sensoreinrichtungen 104a, 104b, 104c, 140d ermöglicht es, die Position eines einfahrenden Frachtcontainers, insbesondere des Frachtcontainers 30 aufgrund eines charakteristischen Überdeckungsmusters relativ genau zu bestimmen. So macht es sich die vorliegende Erfindung zunutze, dass aufgrund der Vielzahl von vorhandenen Sensoreinrichtungen 104a, 104b, 104c, 140d eine effektive Positionsbestimmung des Frachtcontainers 30 vorgenommen werden kann. Die Positionen in Verbindung mit der Zeit ergeben einen Datensatz, der die Förderroute F angibt.

Alternative kann die Förderroute F durch ein geordnetes Überdeckungsmuster der Sensoreinrichtungen 104a, 104b, 104c, 104 der Frachtfördereinrichtungen 100, 110, 120, ..., 210 angeben und gespeichert werden. Beispielsweise kann folgendes Log die in Fig. 1 gezeigte Förderroute F spezifizieren:
1. Überdeckung der Frachtfördereinrichtungen 100, 110, 120;
2. Überdeckung der Frachtfördereinrichtungen 140, 150, 160;
3. Überdeckung der Frachtfördereinrichtung 180;
4. Überdeckung der Frachtfördereinrichtung 190.

Unterstellt man, dass das Frachtladesystem jede Förderbahn A, B so belädt, dass die Frachtcontainer 30 mehr oder weniger unmittelbar nebeneinander abgestellt werden und die Endpositionen der bisher verladenden Frachtcontainer 30 bekannt ist, reicht bereits dieses kurze Log aus, um die Endposition des entsprechenden Frachtcontainers 30 zu bestimmen.

In einer Ausführungsform der Erfindung werden jedoch die Überdeckungen der Frachtfördereinrichtungen 100, 110, 120, ..., 210 solange geloggt bis der Frachtcontainer 30 seine Endposition erreicht hat (=Überdeckungsmuster verändert sich nicht mehr).

In einer Ausführungsform liefert jede Frachtfördereinrichtung 100, 110, 120, ..., 210 nur ein Statusflag bezüglich der Überdeckung (Die Informationen der vier Sensoreinrichtungen 104a, 104b, 104c, 140d pro Frachtfördereinrichtung 100, 110, 120, ..., 210 werden zu einem Status zusammengefasst).

In einem anderen Ausführungsbeispiel (Fig. 3) empfängt die Steuerung 20 über die Frachtfördereinrichtung 100, 110, 120, ..., 210 die einzelnen Signale der jeweiligen Sensoreinrichtungen 104a, 104b, 104c, 140d. Des Weiteren empfängt sie Signale von den RFID-Leseeinrichtungen 25, 25', die vorzugsweise bodenseitig in das Frachtdeck 10 eingelassen sind. Optional kann die empfangene Kennung auch Angaben über die Abmessungen des Frachtcontainers 30 enthalten, so dass eine noch genauere Positionsbestimmung anhand des empfangenen Überdeckungsmusters möglich ist.

Wie in der Fig. 3 gezeigt, umfasst die Steuerung 20 eine Speichereinrichtung 21 und einen Prozessor 22. Die Speichereinrichtung speichert u.a. Instruktionen zur Durchführung des erfindungsgemäßen Verfahrens, die auf dem Prozessor 22 ausgeführt werden. Des Weiteren kann die Speichereinrichtung 21 eine oder mehrere Tabellen enthalten, die zu jedem eingefahrenen Frachtstück eine bestimmte Endposition angeben. Diese Tabellen werden beim Beladevorgang dynamisch aktualisiert.

Erfindungsgemäß kann die Steuerung 20 derart ausgebildet sein, dass bei Zwischenstopps des Flugzeugs diese Tabelle aktualisiert wird. Beispielsweise kann bei einem entsprechenden Zwischenstopp der Frachtcontainer 30 von seiner früheren Endposition zu einer neuen Endposition gefahren werden. Diese veränderte Endposition kann wieder in Verbindung mit der Kennung des Frachtcontainers 30 gespeichert werden. Des Weiteren können neue Frachtcontainer 30 auf dem Frachtdeck positioniert werden und zu einem früheren Zeitpunkt eingeladene Frachtcontainer 30 entladen werden. Die beschriebene Steuerung 20 erfasst für jeden Be- und Entladevorgang sowie Umladevorgang die zugehörige Frachtförderroute F und aktualisiert anhand der gewonnenen Informationen die entsprechende Tabelle.

Des Weiteren verfügt die Steuerung 20 in dem beschriebenen Ausführungsbeispiel über eine optionale Eingabeeinrichtung 24. So kann die Steuerung 20 beispielsweise dazu ausgebildet sein, einige Teilabläufe eines Beladevorgangs, beispielsweise das Drehen eines Frachtstücks, automatisiert durchzuführen. Danach kann die Beförderung des Frachtstücks manuell über die Eingabeeinrichtung 24 erfolgen. Insbesondere kann das Bodenpersonal die Frachtladebahn A oder B auswählen und das entsprechende Frachtstück in eine dieser Frachtbahnen A oder B einfahren lassen. Die erfindungsgemäße Steuerung 20 verfolgt die Förderroute F, die das Frachtstück nimmt und kennt somit unabhängig davon, ob der Ladevorgang manuell oder automatisch oder teilautomatisiert durchgeführt wurde, die Endposition des entsprechenden Frachtstücks.

Fig. 5 zeigt rein exemplarisch den Frachtcontainer 30. Dieser ist für die Vereinfachung der Darstellung quadratisch ausgebildet. Die Unterseite des Frachtcontainers, der Frachtboden 31, verfügt über einen überstehenden Rand, in den ein RFID-Tag 34 eingebracht ist. Erfindungsgemäß befindet sich dieses RFID-Tag 34 in einer Ecke des Frachtcontainers 30. Die Präzision des erfindungsgemäßen Verfahrens kann erhöht werden, wenn mehrere RFID-Tags 34, beispielsweise in jeder Ecke eines, vorgesehen sind. Vorzugsweise ist das RFID-Tag 34 derart angeordnet, dass es von unten her, also von einer Richtung senkrecht zu dem Frachtraumboden 31 erfassbar ist.

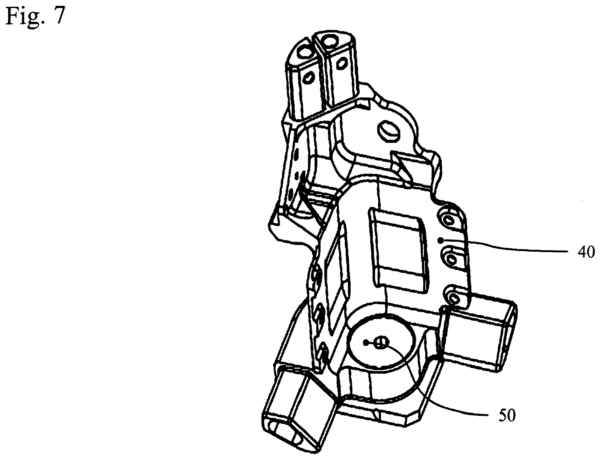

Die Fig. 6, 7 zeigen einen Frachtcontainer 30 mit entsprechend angeordneten vier RFID-Tags 34.

Wie anhand der Fig. 6 ersichtlich, hat der Frachtcontainer 30 einen Rahmen mit vier Eckprofilen 40, 40', 40", 40"'. Jedes dieser vier Eckprofile 40, 40', 40", 40"' verfügt über eine Transponder-Halteeinrichtung 50.

Fig. 7 zeigt die Anordnung der Transponder-Halteeinrichtung 50 in dem Eckprofil 40.

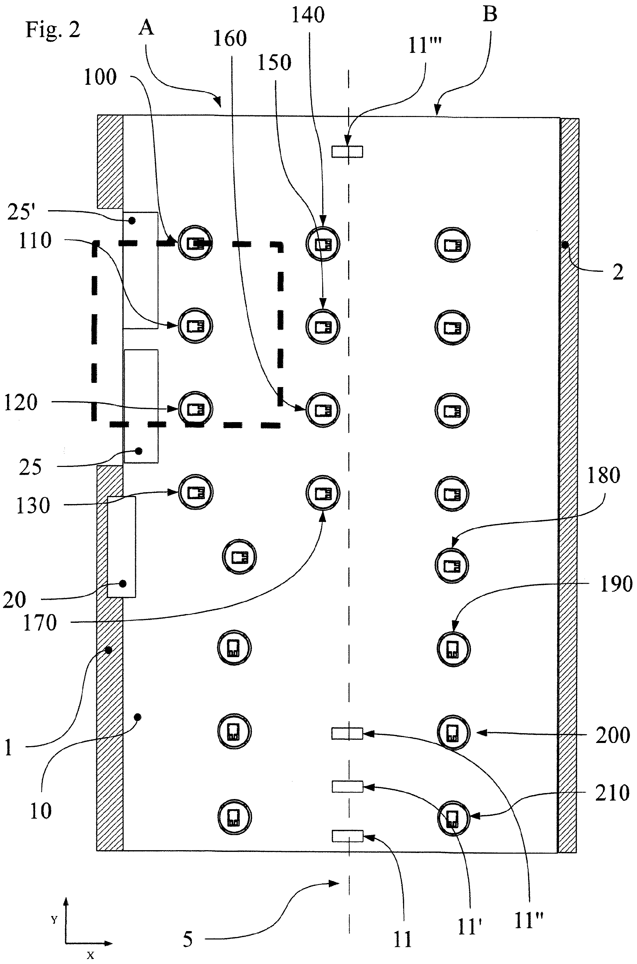

Das Eckprofil 40 ist vorzugsweise nach unten hin offen, so dass ein in der Transponder-Halteeinrichtung gehaltener RFID-Tag 34 von unten her auslesbar ist. Insofern können die RFID-Sensoreinrichtungen 25, 25' aus den Fig. 1 und 2 die entsprechenden RFID-Tags 34 erfassen.

Erfindungsgemäß kann während des Beladens des Flugzeugs ein Ladeplan dynamisch erstellt werden. Ein entsprechendes Verfahren kann die folgenden Schritte umfassen:
- Erfassen einer Kennung des Frachtcontainers;
- Empfangen einer Vielzahl von Signalen von den Sensoren 104a, 104b, 104c, 140d;
- Ermitteln der Förderroute F anhand der Signale;
- Berechnen einer Endposition des Frachtcontainers 30 unter Berücksichtigung der Förderroute;
- Speichern von Daten, die die Endposition sowie die erfasste Kennung des Frachtcontainers 30 angeben.

Das Erfassen der Kennung des Frachtcontainers 30 kann beim Einfahren durch die Türöffnung 7 mittels der in das Frachtdeck 10 integrierten RFID-Sensoreinrichtungen 25, 25' erfolgen. Die Steuerung 20 fragt diese RFID-Sensoreinrichtungen 25, 25' ab und speichert die erfasste Kennung. Danach ergibt sich im Be- und Entladebereich ein charakteristisches Überdeckungsmuster, das sich über die Zeit verändert. Die Steuerung 20 erfasst in regelmäßigen Abständen die Signale der Sensoren 104a, 104b, 104c, 140d zumindest der relevanten Frachtfördereinrichtungen 100, 110, ..., 210. Die Überdeckungsmuster werden in Abhängigkeit von der Zeit in der Speichereinrichtung 21 gespeichert. Nach einer Ausrichtung des Frachtcontainers 30 parallel zur Frachtförderbahn B fährt der Frachtcontainer 30 in die Förderbahn B ein. Auch die Sensoren 100a, 100b, 100c, 100d der in der Frachtförderbahn B installierten Frachtfördereinrichtungen 200, 210 werden in regelmäßigen Abständen abgefragt. Auch hier ergibt sich ein Überdeckungsmuster, das im Laufe der Fahrt des Frachtcontainers 30 in Richtung auf das Heck des Flugzeugs zu wandert. Sobald der Frachtcontainer 30 seine Endposition erreicht hat, ändert sich das Überdeckungsmuster nicht mehr. Die Steuerung 20 kann diesen statischen Zustand erkennen und dies als Indikator dafür nehmen, dass der Frachtcontainer 30 seine Endposition erreicht hat. Zu diesem Zeitpunkt erfolgt eine Speicherung der Endposition in Verbindung mit der zu anfangs erfassten Kennung. Die Daten, die die Endposition angeben, können beispielsweise das konkrete Überdeckungsmuster bestimmter Frachtfördereinrichtungen 100, 110, ... ,210 sein. Alternativ kann das Frachtdeck 10 logisch in verschiedene Ladepositionen unterteilt sein. Jede Position kann eine Identifikationsnummer (al, a2, a3, ...; b1, b2, ...) haben, die dann in Verbindung mit der Kennung des erfassten Frachtstücks gespeichert wird.

Erfindungsgemäß ist es möglich, dass der Frachtcontainer 30 aus seiner ursprünglichen Endposition in eine andere Endposition gefahren wird. Beispielsweise kann der Frachtcontainer 30 gemäß Fig. 1 während eines Zwischenstopps des Flugzeugs aus der Förderbahn B in die Förderbahn A gefahren werden. Die erfindungsgemäße Steuerung 20 überwacht wie beschrieben den Fördervorgang und ermittelt die entsprechende Förderroute F. Die Förderroute F wird erfindungsgemäß genutzt, um die neue Endposition des Frachtcontainers 30 in der Förderbahn A zu bestimmen. Bei der Bestimmung der Endposition können bereits gewonnene Informationen, beispielsweise die Positionen von anderen Frachtcontainern 30 genutzt werden. Sobald der Umladevorgang abgeschlossen ist, speichert die Steuerung 20 wiederum die Kennung in Verbindung mit der Endposition. Alternativ kann ein bereits gespeicherter Datensatz aktualisiert werden.

In der beschriebenen Ausführungsform weist das Frachtdeck 10 lediglich zwei Frachtförderbahnen A, B auf. Es ist ohne weiteres möglich, die erfindungsgemäße Lehre auf ein Frachtdeck 10 anzuwenden, das mehrere Förderbahnen, beispielsweise drei oder vier hat. Auch ist das erfindungsgemäße Verfahren in Verbindung mit einem Frachtdeck 10 nützlich, das keine vorgegebene Einteilung in zwei Frachtbahnen A, B bereitstellt. Bei einer entsprechenden Sensordichte können beliebige Konfigurationen des Frachtdecks 10 und beliebige zugehörige Förderrouten F erfasst werden.

Die erfindungsgemäße Lehre kann auch in Verbindung mit einem Frachtdeck 10 verwendet werden, das verschiedene Konfigurationen anbietet. Theoretisch ist es möglich, dass die konkrete Konfiguration vor dem Beginn des Ladevorgangs manuell eingegeben wird. Alternativ erfasst die Steuerung 20 die Zustände der entsprechenden Riegel, so dass eine dynamische Ermittlung der Frachtdeckkonfiguration gewährleistet wird.

Bei dem beschriebenen Ausführungsbeispiel handelt es sich um ein Flugzeug mit einem entsprechenden Frachtdeck 10. Die erfindungsgemäße Lehre kann ohne weiteres für ein Frachtdeck 10 in einer Lagerhalle, einer Fabrik oder Ähnlichem angewandt werden.

Im beschriebenen Ausführungsbeispiel sind relevante Sensoren unmittelbar an oder nahe den Frachtfördereinrichtungen angeordnet. Es ist ohne weiteres möglich, die Sensoren an anderen Positionen unabhängig von den Frachtfördereinrichtungen anzuordnen.

### Bezugszeichenliste

- 1, 2: Seitenwand
- 5: Mittelebene
- 7: Türöffnung
- 10: Frachtdeck
- 11, 11', 11", 11'": Mittelriegel
- 20: Steuerung
- 21: Speichereinrichtung
- 22: Prozessor
- 24: Eingabeeinrichtung
- 25, 25': RFID-Sensoreinrichtung
- 30: Frachtcontainer
- 31: Frachtboden
- 34: RFID-Tag
- 40, 40`, 40", 40": Eckprofil
- 50: Transponder-Halteeinrichtung
- 100, 110, 120, ..., 210: Frachtfördereinrichtungen
- 101: Rollenantriebseinheiten
- 102a, 102b: Antriebsrollen
- 103: Rotationsteller
- 104a, 104b, 104c, 104d: Sensoreinrichtungen
- 105: Rahmen
- 106: Rotationsachse
- X, Y, Z: X-Richtung, Y-Richtung bzw. Z-Richtung
- A: Frachtladebahn A
- B: Frachtladebahn B
- F: Förderroute

## Patentansprüche

1. Frachtladesystem für das Be- und Entladen eines Frachtdecks (10), umfassend:
- mindestens eine im Eingangsbereich des Flugzeugs angebrachte Frachtleseeinrichtung zum Erfassen mindestens einer Kennung eines Frachtstücks (30);
- eine Vielzahl von Frachtfördereinrichtungen (100, 110,..., 210) mit jeweils mindestens einer Rolle (102a, 102b) zum Fördern des Frachtstücks (30) entlang einer Förderroute (F) in eine Endposition,
- eine Vielzahl von Sensoren (104a, 104b, 104c, 104d),
- eine Steuerung (20) die Signale von Sensoren (104a, 104b, 104c, 104d) empfängt, um eine Bewegung des Frachtstücks (30) entlang der Förderroute anhand eines sich verändernden Überdeckungsmusters zu erfassen, und kommunikativ mit der Frachtleseeinrichtung verbunden ist, wobei das Überdeckungsmuster angibt welche Frachtfördereinrichtungen von dem Frachtstück (30) überdeckt werden,
wobei die Steuerung (20) dazu ausgebildet ist, anhand der Signale die Endposition des Frachtstücks (30) auf dem Frachtdeck zu erfassen, und Daten, die die Endposition angeben, in Verbindung mit der im Eingangsbereich erfassten Kennung des Frachtstücks (30) zu speichern, wobei eine Position dann als Endposition erfasst und in Verbindung mit der erfassten Kennung gespeichert wird, wenn sich das Überdeckungsmuster nicht mehr ändert.

2. Frachtladesystem nach Anspruch 1,
**dadurch gekennzeichnet, dass**
die Steuerung (20) kommunikativ mit der Vielzahl von Frachtfördereinrichtungen (100, 110,..., 210) verbunden ist, um eine Aktivierung mindestens einiger der Frachtfördereinrichtungen (100, 110,..., 210) zu erfassen und/oder diese zu veranlassen.

3. Frachtladesystem nach einem der vorhergehenden Ansprüche,
**dadurch gekennzeichnet, dass**
die Steuerung (20) dazu ausgebildet ist, eine Abmessung einer Bodenfläche des Frachtstücks (30) zu erfassen und für eine Bestimmung der Endposition und/oder Förderroute (F) des Frachtstücks zu verarbeiten.

4. Frachtladesystem nach einem der vorhergehenden Ansprüche,
**dadurch gekennzeichnet, dass**
die Sensoren (104a, 104b, 104c, 104d) Lichtsensoren umfassen, die derart am Frachtdeck (10) angeordnet und ausgebildet sind, dass sie zumindest das Vorhandensein eines Frachtstücks (30) erfassen.

5. Frachtladesystem nach einem der vorhergehenden Ansprüche,
**dadurch gekennzeichnet, dass**
zumindest eine Teilmenge der Sensoren (104a, 104b, 104c, 104d) in einem das Frachtdeck (10) in seiner Breite überspannenden Raster angeordnet ist.

6. Frachtladesystem nach einem der vorhergehenden Ansprüche,
**dadurch gekennzeichnet, dass**
zumindest eine Teilmenge der Frachtfördereinrichtungen (100, 110,..., 210) jeweils mindestens einen Sensor (104a, 104b, 104c, 104d) zur Erfassung des Frachtstücks (30) umfasst, wobei
die Sensoren (104a, 104b, 104c, 104d) an der jeweiligen Frachtfördereinrichtung (100, 110,..., 210), die mindestens eine Rolle (102a, 102b) umgebend, angeordnet ist.

7. Frachtladesystem nach einem der vorhergehenden Ansprüche,
**dadurch gekennzeichnet, dass**
zumindest eine Teilmenge der Frachtfördereinrichtungen (100, 110,..., 210) in einem Raster im Be- und Entladebereich des Frachtdeckes (10) angeordnet ist.

8. Frachtladesystem nach einem der vorhergehenden Ansprüche,
**dadurch gekennzeichnet, dass**
die Steuerung (20) dazu ausgebildet ist, zumindest einige der Signale als Signalsatz in Verbindung mit einer Reihenfolge und/oder einer Zeitangabe zu speichern.

9. Frachtladesystem nach einem der vorhergehenden Ansprüche,
**dadurch gekennzeichnet, dass**
die Steuerung (20) dazu ausgebildet ist, unter Berücksichtigung einer eingegebenen Ladeposition eine Steuerstrategie zu entwickeln und eine Vielzahl der Frachtfördereinrichtungen (100, 110,..., 210) gemäß der Steuerstrategie zu steuern.

10. Verfahren zur Erstellung und/oder Aktualisierung eines Ladeplans, umfassend die Schritte:
- Erfassen einer Kennung eines Frachtstücks (30) in mindestens einem Einfahrtsbereich eines Frachtdecks (10);
- Empfangen einer Vielzahl von Signalen von Sensoren (104a, 104b, 104c, 104d), die zumindest über einen Abschnitt des Frachtdecks (10) verteilt angeordnet sind,
- Ermitteln einer Förderroute (F) anhand der Signale, wobei die Förderroute (F) durch ein geordnetes Überdeckungsmuster der Sensoren angegeben und gespeichert wird;
- Berechnen einer Endposition des Frachtstücks (30) unter Berücksichtigung der Förderroute (F), wobei eine Endposition dann berechnet wird, wenn sich das Überdeckungsmuster nicht mehr ändert;
- Speichern von Daten, die die berechnete Endposition angeben, in Verbindung mit der im Einfahrtsbereich erfassten Kennung, wobei Kennung und Endposition genutzt werden, um den Ladeplan zu erstellen und/oder zu aktualisieren.

11. Verfahren nach Anspruch 11,
**dadurch gekennzeichnet, dass**
das Erfassen der Kennung ein Auslesen eines am Frachtstück (30) angebrachten Speichers mittels einer Leseeinrichtung (25) umfasst.

12. Verfahren nach Anspruch 10 oder 11,
**dadurch gekennzeichnet, dass**
mindestens einige der Signale von den Sensoren in einer zeitlichen Reihenfolge und/oder in Verbindung mit Zeitangaben gespeichert werden.

13. Computer lesbares Medium mit Instruktionen zur Durchführung des Verfahrens nach einem der Ansprüche 10 bis 12, wenn die Instruktionen auf einer Recheneinheit ausgeführt werden.

## Claims

1. Freight loading system for loading and unloading a freight deck (10), comprising:
- at least one freight reading device mounted in the entry area of the aeroplane for detecting at least one identifier of an item of freight (30);
- a plurality of freight conveying means (100, 110, ..., 210), each having at least one roller (102a, 102b) for conveying the item of freight (30) along a conveying route (F) into an end position,
- a plurality of sensors (104a, 104b, 104c, 104d),
- a control unit (20) which receives signals from the sensors (104a, 104b, 104c, 104d) in order to detect a movement of the item of freight (30) along the conveying route based on a changing overlap pattern, and is in communicative coupling with the freight reading device, wherein the overlap pattern indicates which freight conveying means are overlapped by the item of freight (30),
wherein the control unit (20) is configured to detect the end position of the item of freight (30) on the freight deck based on the signals and to store data indicating the end position in conjunction with the identifier of the item of freight (30) detected in the entry area, wherein a position is then detected as an end position and is stored in conjunction with the detected identifier when the overlap pattern does not change any more.

2. Freight loading system according to claim 1,
**characterised in that**
the control unit (20) is in communicative coupling with the plurality of freight conveying means (100, 110, ..., 210) so as to detect and/or cause an activation of at least some of the freight conveying means (100, 110, ..., 210).

3. Freight loading system according any one of the preceding claims,
**characterised in that**
the control unit (20) is configured to detect a dimension of a floor area of the item of freight (30) and to process it for determining the end position and/or conveying route (F) of the item of freight (30).

4. Freight loading system according any one of the preceding claims,
**characterised in that**
the sensors (104a, 104b, 104c, 104d) comprise light sensors which are arranged on the freight deck (10) and configured so as to detect at least the presence of an item of freight (30).

5. Freight loading system according any one of the preceding claims,
**characterised in that**
at least a subset of the sensors (104a, 104b, 104c, 104d) is arranged in a grid spanning the freight deck (10) in its width.

6. Freight loading system according any one of the preceding claims,
**characterised in that**
at least a subset of the freight conveying means (100, 110, ..., 210) in each case comprises at least one sensor (104a, 104b, 104c, 104d) for detecting the item of freight (30), wherein
the sensors (104a, 104b, 104c, 104d) are arranged on the respective freight conveying means (100, 110, ..., 210) so as to surround the at least one roller (102a, 102b).

7. Freight loading system according any one of the preceding claims,
**characterised in that**
at least a subset of the freight conveying means (100, 110, ..., 210) is arranged in a grid in the loading and unloading area of the freight deck (10).

8. Freight loading system according any one of the preceding claims,
**characterised in that**
the control unit (20) is configured to store at least some of the signals as a signal set in conjunction with a chronological order and/or time specification.

9. Freight loading system according any one of the preceding claims,
**characterised in that**
the control unit (20) is configured to develop a control strategy with consideration of an input loading position, and to control a plurality of the freight conveying means (100, 110, ..., 210) according to the control strategy.

10. Method for establishing and/or updating a loading plan, comprising the steps of:
- detecting an identifier of an item of freight (30) in at least one entrance area of a freight deck (10);
- receiving a plurality of signals from sensors (104a, 104b, 104c, 104d) arranged so as to be distributed at least across a section of the freight deck (10),
- determining a conveying route (F) based on the signals, wherein the conveying route (F) is indicated and stored by an ordered overlap pattern of the sensors;
- calculating an end position of the item of freight (30) with consideration of the conveying route (F), wherein an end position is calculated whenever the overlap pattern does not change any more;
- storing of data indicating the calculated end position in conjunction with the identifier detected in the entrance area, with the identifier and the end position being used to establish and/or update the loading plan.

11. Method according to claim 11,
**characterised in that**
the detecting of the identifier comprises reading a memory attached to the item of freight (30) by means of a reading device (25).

12. Method according to claim 10 or 11,
**characterised in that**
at least some of the signals from the sensors are stored in a chronological order and/or in conjunction with time specifications.

13. Computer-readable medium including instructions for implementing the method according to any one of claims 10 to 12, when the instructions are executed on a computing unit.

## Revendications

1. Système de charge de fret pour le chargement et le déchargement d'une soute de fret (10), incluant :
- au moins un dispositif de lecture de fret monté dans la zone de l'entrée d'un avion, pour détecter au moins une identification d'un article de fret (30) ;
- une pluralité de dispositifs de convoyage de fret (100, 110, ..., 210) comprenant chacun au moins un rouleau (102a, 102b) pour convoyer l'article de fret (30) le long d'un trajet de convoyage (F) jusque dans une position finale,
- une pluralité de capteurs (104a, 104b, 104c, 104d),
- une commande (20) qui reçoit des signaux provenant des capteurs (104a, 104b, 104c, 104d) afin de détecter un mouvement de l'article de fret (30) le long du trajet de convoyage au moyen d'un motif à recouvrement qui se modifie, et qui est reliée en termes de communication avec le dispositif de lecture de fret, de sorte que le motif à recouvrement indique ceux des dispositifs de convoyage de fret qui sont recouverts par l'article de fret (30),
dans lequel la commande (20) est réalisée pour détecter, au moyen des signaux, la position finale de l'article de fret (30) dans la soute de fret, et pour mémoriser des données qui indiquent la position finale, en liaison avec l'identification de l'article de fret (30) détectée dans la zone d'entrée, dans lequel une position est détectée comme position finale et mémorisée en association avec l'identification détectée lorsque le motif à recouvrement ne change plus.

2. Système de charge de fret selon la revendication 1,
**caractérisé en ce que** la commande (20) est reliée en termes de communication avec la pluralité de dispositifs de convoyage de fret (100, 110, ..., 210) afin de détecter une activation d'au moins quelques-uns des dispositifs de convoyage de fret (100, 110, ...,210) et/ou pour provoquer cette activation.

3. Système de charge de fret selon l'une des revendications précédentes, **caractérisé en ce que** la commande (20) est réalisée pour détecter une dimension d'une surface de fond de l'article de fret (30) et pour la traiter en vue d'une détermination de la position finale et/ou du trajet de convoyage (F) de l'article de fret.

4. Système de charge de fret selon l'une des revendications précédentes, **caractérisé en ce que** les capteurs (104a, 104b, 104c, 104d) incluent des détecteurs de lumière, qui sont agencés dans la soute de fret (10) et qui sont réalisés de telle façon qu'ils détectent au moins la présence d'un article de fret (30).

5. Système de charge de fret selon l'une des revendications précédentes, **caractérisé en ce qu'**au moins un groupe partiel des capteurs (104a, 104b, 104c, 104d) est agencé selon une trame qui coiffe la soute de fret (10) dans sa largeur.

6. Système de charge de fret selon l'une des revendications précédentes, **caractérisé en ce qu'**au moins un groupe partiel des dispositifs de convoyage de fret (100, 110, ..., 210) inclut respectivement au moins un capteur (104a, 104b, 104c, 104d) pour détecter l'article de fret (30),
et
les capteurs (104a, 104b, 104c, 104d) sont agencés sur le dispositif de convoyage de fret (100, 110, ..., 210) respectif en entourant ledit au moins un rouleau (102a, 102b).

7. Système de charge de fret selon l'une des revendications précédentes, **caractérisé en ce qu'**au moins un groupe partiel des dispositifs de convoyage de fret (100, 110, ..., 210) sont agencés dans une trame dans la zone de chargement et de déchargement de la soute de fret (10).

8. Système de charge de fret selon l'une des revendications précédentes, **caractérisé en ce que** la commande (20) est réalisée pour mémoriser au moins quelques-uns des signaux à titre de jeu de signaux en association avec une succession et/ou une indication temporelle.

9. Système de charge de fret selon l'une des revendications précédentes, **caractérisé en ce que** la commande (20) est réalisée pour développer une stratégie de commande, en prenant en compte d'une position de chargement entrée, et pour commander une pluralité de dispositifs de convoyage de fret (100, 110,..., 210) selon la stratégie de commande.

10. Procédé pour établir et/ou actualiser un plan de chargement, incluant les étapes consistant à :
- détecter une identification d'un article de fret (30) dans au moins une zone d'entrée d'une soute de fret (10) ;
- recevoir une pluralité de signaux provenant de capteurs (104a, 100b, 104c, 104d) qui sont agencés au moins sur une portion de la soute de fret (10),
- déterminer un trajet de convoyage (F) au moyen des signaux, le trajet de convoyage (F) étant indiqué par un motif de recouvrement ordonné des capteurs et mémorisé ;
- calculer une position finale de l'article de fret (30) en tenant compte du trajet de convoyage (F), et une position finale est alors calculée quand le motif de recouvrement ne change plus ;
- mémoriser des données, qui indiquent la position finale calculée, en association avec l'identification détectée dans la zone d'entrée, l'identification et la position finale étant utilisées pour établir et/ou pour actualiser le plan de chargement.

11. Procédé selon la revendication 11,
**caractérisé en ce que** la détection de l'identification inclut une lecture d'une mémoire appliquée sur l'article de fret (30) au moyen d'un dispositif de lecture (25).

12. Procédé selon la revendication 10 ou 11,
**caractérisé en ce qu'**au moins quelques-uns des signaux provenant des capteurs sont mémorisés dans une succession temporelle et/ou en association avec des indications temporelles.

13. Support lisible à l'ordinateur avec des instructions pour mettre en oeuvre le procédé selon l'une des revendications 10 à 12, quand les instructions sont exécutées sur une unité de calcul.
